# EUROPEAN PATENT APPLICATION

(11) **EP 2 544 194 A1**
(43) Date of publication of application: **09.01.2013**
(21) Application number: 12175302.4
(22) Date of filing: 06.07.2012
(51) Int. Cl.: H01B 3/30, H01B 3/46, B32B 27/08, H01F 6/06, H02K 55/00, B32B 27/28

(54) **Covering material, covered rectangular electric wire and electrical device**

(30) Priority: 07.07.2011 JP 2011151058
(71) Applicant: Nitto Denko Corporation, Osaka 567-8680 (JP); Nitto Shinko Corporation, Sakai-shi, Fukui 910-0381 (JP)
(72) Inventor: Nagai, Yozo, Ibaraki-shi, Osaka 567-8680 (JP); Matsushita, Kiichiro, Ibaraki-shi, Osaka 567-8680 (JP); Furuta, Yoshihisa, Ibaraki-shi, Osaka 567-8680 (JP); Masaki, Shunsuke, Ibaraki-shi, Osaka 567-8680 (JP); Hayashi, Kazunori, Sakai-shi, Fukui 910-0381 (JP)
(74) Representative: Grünecker, Kinkeldey, Stockmair & Schwanhäusser

(57) **Abstract**

Provided is a covering material 10, characterized in that the covering material 10 is a covering material for covering a rectangular electric wire in such a way that the covering material is spirally wound around the rectangular electric wire in a manner partially overlapping with itself; and the covering material includes a backing 11 having a tensile modulus of elasticity at 25°C of 5.0 GPa or more.

## Description

### BACKGROUND OF THE INVENTION

### Field of the Invention

The present invention relates to a covering material, a covered rectangular electric wire including the same covering material and an electrical device including the same covering material.

### Description of the Related Art

In coil devices such as rotary devices and magnets to be used in electrical devices, there have been used covered rectangular electric wires obtained by winding insulating covering materials around rectangular electric wires. As the rectangular electric wires, there have hitherto been used wires made of copper, copper alloys, aluminum, aluminum alloys, and combinations of two or more of these metals; recently, for example, bismuth-based, yttrium-based and niobium-based superconducting wires have been used.

As a covered rectangular electric wire obtained by covering a rectangular electric wire with such a type of insulating covering material, for example, there has been disclosed an insulating film tape-covered rectangular electric wire obtained by spirally winding an insulating film tape, in a half-lap manner, around rectangular electric wires arranged in parallel with each other (see Patent Document 1).

### Prior Art Documents

### Patent Documents

Patent Document 1: Japanese Patent Application Laid-open No. 2000-4552

### SUMMARY OF THE INVENTION

However, in a case where a rectangular electric wire is covered with such an insulating film tape as described above, the reliability of the overlap of the insulating film tape with itself is sometimes degraded. In other words, a necking phenomenon occurs, and accordingly, the width of the overlap portion of the insulating film tape with itself (lap portion) sometimes becomes locally narrower than the intended width. When the degree of the necking becomes too large, the insulating film tape does not overlap with itself, and accordingly, sometimes covering gaps are formed or the rectangular electric wire(s) is exposed to result in the degradation of the insulation property of the covered rectangular electric wire(s).

In view of the above-described problems, an object of the present invention is to provide a covering material, capable of suppressing the degradation of the reliability of the overlap when the covering is made by spirally winding the covering material around a rectangular electric wire(s) in a manner partially overlapping with itself, a covered rectangular electric wire including the covering material and an electrical device including the covering material.

In general, when a rectangular electric wire is covered with a covering material, the covering is performed while a tension is being exerted on the covering material in order to increase the adhesion of the covering material with the rectangular electric wire. Under such circumstances, for the purpose of solving the aforementioned problems, the present inventors paid attention to the occurrence of the necking phenomenon caused by the tension. The present inventors made a diligent study on the relation between the property and the reliability of the overlap of the covering material, and consequently, the present inventors have perfected the present invention by discovering that the tensile modulus of elasticity of the covering material possibly significantly affects the reliability of the overlap.

Specifically, according to the present invention, there is provided a covering material, in which the covering material is a covering material for covering a rectangular electric wire in such a way that the covering material is spirally wound around the rectangular electric wire in a manner partially overlapping with itself, wherein the covering material includes a backing having a tensile modulus of elasticity at 25°C of 5.0 GPa or more.

Such a covering material includes a backing having a tensile modulus of elasticity at 25°C falling within the aforementioned range, and hence is capable of suppressing the occurrence of the necking phenomenon in an arrangement where the covering material covers a rectangular electric wire and enables the suppression of the degradation of the reliability of the overlap. Moreover, the degradation of the insulation property of the covered rectangular electric wire can be suppressed, which degradation is caused in a case where a covered rectangular electric wire is produced by covering a rectangular electric wire with the covering material.

In the covering material, a thickness is preferably 50 µm or less.

Because the covering material has a thickness of 50 µm or less, it is possible to reduce the level difference between the covering material wound around a rectangular electric wire and the rectangular electric wire portion around which the covering material is not yet wound, and hence the covering material is made to more easily follow the shape of the rectangular electric wire. Accordingly, it is made possible to more suppress the degradation of the reliability of the overlap.

The covering material preferably further includes a viscoelastic layer formed on a surface of the backing, and the backing contains a polyimide resin.

Polyimide resin has heat resistance and cold resistance and also is a nonflammable material, and hence has excellent flame retardancy as an insulating material to be used for electrical devices. Consequently, the inclusion of the polyimide resin-containing backing results in the covering material having flame retardancy. The inclusion of the viscoelastic layer increases, when a rectangular electric wire is covered with the covering material, the adhesion between the covering material and the rectangular electric wire and the adhesion of the covering material with itself, so as to enable the degradation of the reliability of the overlap to be more suppressed.

In the covering material, the viscoelastic layer preferably contains a silicone-based viscoelastic composition.

The silicone-based viscoelastic composition is excellent in cold resistance, radiation resistance, heat resistance and corrosion resistance, and hence can improve the properties of the viscoelastic layer.

In the covering material, the rectangular electric wire is preferably a superconducting wire.

A superconducting wire is used at low temperatures, and hence when the reliability of the overlap is degraded to result in the occurrence of a gap or the like between the abutting portions of the covering material, the electric insulation property (dielectric breakdown voltage) is remarkably degraded. However, the covering material includes the backing having the tensile modulus of elasticity falling within the aforementioned range, hence can suppress the degradation of the reliability of the overlap, and accordingly can suppress the degradation of the electrical insulation property. Thus, the covering material of the present invention can be preferably used as a covering material for a superconducting wire.

The covered rectangular electric wire of the present invention includes the covering material, and the rectangular electric wire covered with the covering material in such a way that the covering material is spirally wound around the rectangular electric wire in a manner partially overlapping with itself.

Thus, the degradation of the insulation property of the covered rectangular electric wire can be suppressed.

The electrical device of the present invention is produced by using the covered rectangular electric wire.

Thus, it is possible to suppress the degradation of the properties of the electrical devices due to the degradation of the insulation property of the covered rectangular electric wire.

As described above, according to the present invention, it is possible to provide a covering material capable of suppressing the degradation of the reliability of the overlap, which degradation is caused in an arrangement where the rectangular electric wire is covered with the covering material in such a way that the covering material is spirally wound around the rectangular electric wire in a manner partially overlapping with itself, and also provide a covered rectangular electric wire including this covering material and an electrical device including this covering material.

### BRIEF DESCRIPTION OF THE DRAWINGS

FIG. 1 is a schematic side view illustrating a covering material in a first embodiment of the present invention;
FIG. 2 is a schematic cross-sectional view illustrating the covering material in the first embodiment of the present invention, and is an enlarged cross-sectional view of the region II in FIG. 1;
FIG. 3 is a schematic oblique perspective view illustrating a covered rectangular electric wire in a second embodiment of the present invention;
FIG. 4 is a schematic plan view illustrating the covered rectangular electric wire in the second embodiment of the present invention;
FIG. 5 is a schematic cross-sectional view, along the V-V line in FIGS. 3 and 4, illustrating the covered rectangular electric wire in the second embodiment of the present invention;
FIG. 6 is a schematic cross-sectional view along the line VI-VI in FIG. 4 illustrating the covered rectangular electric wire in the second embodiment of the present invention;
FIG. 7 is a schematic cross-sectional view along the line VII-VII in FIG. 4 illustrating the covered rectangular electric wire in the second embodiment of the present invention; and
FIG. 8 is a schematic oblique perspective view illustrating a coil as an example of the electrical device in a third embodiment of the present invention.

### DETAILED DESCRIPTION OF THE PREFERRED EMBODIMENTS

Hereinafter, the embodiments of the present invention are described with reference to the accompanying drawings. Hereinafter, the same symbols are attached to the same or corresponding parts in the drawings, of which the descriptions are not repeated.

### First Embodiment

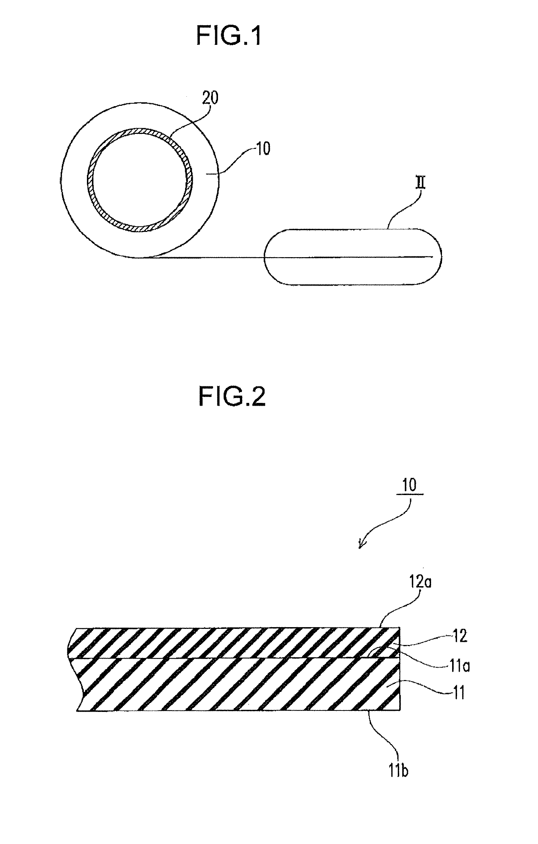

With reference to FIGS. 1 and 2, the covering material according to a first embodiment of the present invention is described. As shown in FIGS. 1 and 2, the covering material 10 is a covering material for covering a rectangular electric wire.

As shown in FIG. 1, the covering material 10 is of a tape shape, and is, for example, wound around a winding core 20 in a roll shape. The covering material 10 is not limited to a tape shape, but may also take any other shapes such as a sheet shape and a film shape.

As shown in FIG. 2, the covering material 10 includes a backing 11 having an upper surface 11a and a lower surface 11b opposite to the upper surface 11a, and a viscoelastic layer 12 formed on the upper surface 11a of the backing 11. Another layer may be further formed between the backing 11 and the viscoelastic layer 12. A release liner (not shown) for protecting the upper surface 12a may be formed on the upper surface 12a of the viscoelastic layer 12. Preferably, no viscoelastic layer 12 is formed on the lower surface 11b of the backing 11.

The backing 11 is not particularly limited as long as the backing 11 has an insulating property; however, the backing 11 preferably has heat resistance and cold resistance. Examples of such a backing 11 include polyimide resin, polyether resin, polyether ether ketone resin, polyether imide resin and polyamide-imide resin. These resins may be used each alone or as mixtures of two or more thereof. Among these resins, in particular, polyimide resin is preferably used as the backing 11. Polyimide resin is a nonflammable material as well as a heat resistant material; hence, because of having an excellent flame retardancy as an insulating material used in an electrical device, polyimide resin has excellent properties as the backing 11 of the covering material 10 of the present embodiment.

Polyimide resin can be obtained by heretofore well known or conventional methods. For example, polyimide can be obtained by allowing an organic tetracarboxylic acid dianhydride and a diamino compound (diamine) to react with each other to synthesize a polyimide precursor (polyamide acid), and by dehydrating and ring-closing the polyimide precursor.

Examples of the organic tetracarboxylic acid dianhydride include: pyromellitic acid dianhydride, 3,3',4,4'-biphenyl tetracarboxylic acid dianhydride, 2,2-bis(2,3-dicarboxyphenyl)-1,1,1,3,3,3-hexafluoropropane dianhydride, 2,2-bis(3,4-dicarboxyphenyl)-1,1,1,3,3,3-hexafluoropropane dianhydride, 3,3',4,4'-benzophenone tetracarboxylic acid dianhydride, bis(3,4-dicarboxyphenyl)ether dianhydride and bis(3,4-dicarboxyphenyl)sulfone dianhydride. These organic tetracarboxylic acid dianhydrides may be used each alone or as mixtures of two or more thereof.

Examples of the diamino compound include m-phenylenediamine, p-phenylenediamine, 3,4-diaminodiphenyl ether, 4,4-diaminodipbenyl ether, 4,4'-diaminodiphenyl sulfone, 3,3-diaminodiphenyl sulfone, 2,2-bis(4-aminophenoxyphenyl)propane, 2,2-bis(4-aminophenoxyphenyl)hexafluoropropane, 1,3-bis(4-aminophenoxy)benzene, 1,4-bis(4-aminophenoxy)benzene, 2,4-diaminotoluene, 2,6-diaminotoluene, diaminodiphenylmethane, 2,2'-dimethyl-4,4'-diaminobiphenyl and 2,2'-bis(trifluoromethyl)-4,4'-diaminobiphenyl. These diamino compounds may be used each alone or as mixtures of two or more thereof.

As the diamino compound, compounds having an ether bond are preferable; specifically, it is preferable to use 4,4'-diaminodiphenyl ether (ODA). The inclusion of ODA improves the elongation of the covering material 10, and allows the covering material 10 to be designed as a soft film. The addition amount of ODA in the diamino compound component is preferably 10 mol% or more and 100 mol% or less and more preferably 50 mol% or more and 100 mol% or less.

For the polyimide resin used in the present embodiment, it is preferable to use pyromellitic acid dianhydride or 3,3',4,4'-biphenyl tetracarboxylic acid dianhydride as an organic tetracarboxylic acid dianhydride, and p-phenylenediamine or 4,4'-diaminodiphenyl ether as a diamino compound.

As such a polyimide resin, for example, the following commercially available products can also be used: Kapton (registered trademark) EN (manufactured by Du Pont-Toray Co., Ltd.) and Upilex (registered trademark) -S (manufactured by Ube Industries, Ltd.).

The backing 11 has a thickness of preferably 50 µm or less, more preferably 25 µm or less and furthermore preferably 13 µm or less. When the thickness is 50 µm or less, it is possible to reduce the level difference between the covering material wound around the rectangular electric wire and the rectangular electric wire portion around which the covering material is not yet wound, and hence it is made possible to more suppress the degradation of the reliability of the overlap. Additionally, the insulating layer can be made thinner, hence the occupation area ratio of the rectangular electric wire per unit cross-sectional area can be increased, and accordingly the wire occupation rate can be increased and the performances of the coil devices and the like can be improved.
On the other hand, the backing 11 has a thickness of preferably 5 µm or more, more preferably 7 µm or more and furthermore preferably 7.5 µm or more. The thickness of 5 µm or more is preferable from the viewpoint of the handleability of the backing 11.

For the purpose of improving the anchoring capability of the backing 11 with the below described viscoelastic layer 12, the backing 11 may be subjected to a chemical treatment such as a sputtering etching treatment, a corona treatment or a plasma treatment, or alternatively may be coated with a primer.

The backing 11 in the present embodiment may be formed of a layer or a plurality of layers.

The viscoelastic layer 12 includes a base polymer constituting a viscoelastic material. Such a base polymer is not particularly limited, and base polymers appropriately selected from heretofore known base polymers can be used as such a base polymer; examples of such a base polymer include acrylic-based polymers, rubber-based polymers, vinyl alkyl ether-based polymers, silicone-based polymers, polyester-based polymers, polyamide-based polymers, urethane-based polymers, fluorine-based polymers and epoxy-based polymers. These base polymers may be used each alone or as mixtures of two or more thereof. Among these base polymers, it is preferable to use a silicone-based polymer as the viscoelastic layer 12, from the viewpoint of being excellent in cold resistance, radiation resistance, heat resistance and corrosion resistance. In other words, the viscoelastic layer 12 preferably includes a silicone-based polymer-containing viscoelastic composition (silicone-based viscoelastic composition), and preferably the viscoelastic layer 12 is mainly composed of a silicone-based viscoelastic composition with the balance being composed of inevitable impurities.

The silicone-based viscoelastic composition includes a cross-linking structure of a mixture mainly composed of a silicone rubber and a silicone resin.

As the silicone rubber, for example, an organopolysiloxane including dimethylsiloxane as a main constitutional unit can be preferably used. A vinyl group or other functional groups may be introduced into the organopolysiloxane if necessary. The weight average molecular weight of the organopolysiloxane is usually 180,000 or more, and is preferably 280,000 or more and 1,000,000 or less and more preferably 500,000 or more and 900,000 or less. These silicone rubbers may be used each alone or as mixtures of two or more thereof. When the weight average molecular weight is low, the gel fraction can be adjusted by regulating the amount of a cross-linking agent.

It is possible to preferably use, as the silicone resin, for example, an organopolysiloxane made of a copolymer having at least one unit selected from the M unit (R₃SiO_{1/2}), the Q unit (SiO₂), the T unit (RSiO_{3/2}) and the D unit (R₂SiO) (in these units, R represents a monovalent hydrocarbon group or a hydroxy group). The organopolysiloxane made of the copolymer may have one or more OH groups, and additionally, may also have various functional groups such as a vinyl group, as introduced therein, if necessary. The functional groups to be introduced may also be groups to cause cross-linking reactions. As the copolymer, the MQ resin composed of the M unit and the Q unit is preferable.

The mixing ratio (weight ratio) between the silicone rubber and the silicone resin is not particularly limited; however, the ratio silicone rubber:silicone resin is preferably approximately 100:0 to 20:80 and more preferably approximately 100:0 to 30:70. The silicone rubber and the silicone resin may also be simply mixed together or may also be used as a partial condensation product between the silicone rubber and the silicone resin.

The aforementioned mixture usually contains a cross-linking agent for the purpose of converting the mixture into a cross-linked structure. The gel fraction of the silicone-based viscoelastic composition can be regulated with a cross-linking agent.

The gel fraction of the viscoelastic layer 12 varies depending on the type of the silicone-based viscoelastic composition; the gel fraction of the viscoelastic layer 12 is generally preferably 20% or more and 99% or less and more preferably approximately 30% or more and 98% or less. The gel fraction falling within such a range offers an advantage that it is easy to establish the balance between adhesive force and retention force. Specifically, when the gel fraction is 99% or less, it is possible to suppress the occurrence of the decrease of the initial adhesive force and thus result in satisfactory sticking; when the gel fraction is 20% or more, a sufficient retention force is obtained, and hence the displacement of the covering material 10 can be suppressed.

The gel fraction (% by weight) of the silicone-based viscoelastic composition in the present embodiment is a value obtained as follows: a sample of a dry weight W₁ (g) is sampled from the silicone-based viscoelastic composition and immersed in toluene; then the insoluble matter of the sample is taken out from the toluene; then after drying the weight W₂ (g) of the insoluble matter is measured, and the gel fraction is derived from the formula (W₂/W₁) × 100.

The silicone-based viscoelastic composition in the present embodiment can use the following generally used cross-linkages: a peroxide curing type cross-linkage due to a peroxide-based cross-linking agent and an addition reaction type cross-linkage due to a Si-H group-containing siloxane-based cross-linking agent.

The cross-linking reaction of the peroxide-based cross-linking agent is a radical reaction, and accordingly the cross-linking reaction is allowed to proceed usually at a high temperature of 150°C or higher and 220°C or lower. On the other hand, the cross-linking reaction between a vinyl group-containing organopolysiloxane and a siloxane-based cross-linking agent is an addition reaction, and accordingly the reaction usually proceeds at a low temperature of 80°C or higher and 150°C or lower. In the present embodiment, the addition reaction-type cross-linkage is preferable particularly from the viewpoint that the cross-linking can be completed at a low temperature in a short period of time.

As the peroxide-based cross-linking agent, various cross-linking agents having hitherto been used for the silicone-based viscoelastic composition can be used without any particular limitation. Examples of such a peroxide-based cross-linking agent include benzoyl peroxide, t-butylperoxy benzoate, dicumyl peroxide, t-butyl cumyl peroxide, t-butyl peroxide, 2,5-dimethyl-2,5-di-t-butylperoxy hexane, 2,4-dichlorobenzoyl peroxide, di-t-butylperoxy-diisopropyl benzene, 1,1-bis(t-butylperoxy)-3,3,5-trimethylcyclohexane and 2,5-dimethyl-2,5-di-t-butylperoxy hexyne-3. These peroxide-based cross-linking agents may be used each alone or as mixtures of two or more thereof. Usually, the used amount of the peroxide-based cross-linking agent is preferably 0.15 part by weight or more and 2 parts by weight or less and more preferably 0.5 part by weight or more and 1.4 parts by weight or less in relation to 100 parts by weight of the silicone rubber.

As the siloxane-based cross-linking agent, for example, a polyorganohydrogen siloxane having in the molecule thereof at least on average two or more hydrogen atoms bonded to the silicon atom is used. Examples of the organic group bonded to the silicon atom include an alkyl group, a phenyl group and a halogenated alkyl group; however, from the viewpoint of the easiness in synthesis and handling, a methyl group is preferable. The skeletal structure of siloxane may be any of linear chain, branched chain and annular structures; preferable among these is a linear chain structure.

The siloxane-based cross-linking agent is mixed in an addition amount such that the number of the hydrogen atoms bonded to the silicon atoms is preferably one or more and 30 or less and more preferably four or more and 17 or less in relation to one vinyl group in the silicone rubber and the silicone resin. When the number of the hydrogen atoms bonded to the silicon atoms is one or more, a sufficient cohesive force is obtained; when the number of the hydrogen atoms bonded to the silicon atoms is four or more, a more sufficient cohesive force is obtained; when the number of the hydrogen atoms bonded to the silicon atoms is 30 or less, the degradation of the adhesion property can be suppressed; and when the number of the hydrogen atoms bonded to the silicon atoms is 17 or less, the degradation of the adhesion property can be more suppressed.
When the siloxane-based cross-linking agent is used, usually a platinum catalyst is used; however, various other catalysts can also be used.
When the siloxane-based cross-linking agent is used, a vinyl group-containing organopolysiloxane is used as the silicone rubber, and the content of the vinyl group is preferably approximately 0.0001 mol/100 g or more and 0.01 mol/100 g or less.

Within a range not impairing the advantageous effects of the present invention, for example, the following heretofore known various additives can be appropriately mixed in the viscoelastic layer of the present invention, in addition to the aforementioned base polymer: a tackifier, a plasticizer, a dispersant, an antiaging agent, an antioxidant, a processing aid, a stabilizer, an antifoaming agent, a flame retardant, a thickener, a pigment, a softener and a filler.

The viscoelastic layer 12 has a thickness of preferably 0.5 µm or more and 50 µm or less and more preferably 1 µm or more and 25 µm or less. The thickness of the viscoelastic layer 12 falling within this range offers an advantage that an appropriate adhesiveness can be obtained.
Specifically, when the thickness of the viscoelastic layer 12 is 10 µm or less, it is possible to increase the wire occupation rate of the rectangular electric wire in the covered rectangular electric wire formed when the rectangular electric wire is covered with the covering material 10, and thus it is possible to improve the performances of coil devices and the like. When the thickness of the viscoelastic layer 12 is 5 µm or less, it is possible to further increase the wire occupation rate, and hence it is possible to further improve the performances of coil devices and the like.
On the other hand, when the thickness of the viscoelastic layer 12 is 1 µm or more, it is possible to increase the degree of the adhesion to the rectangular electric wire, and hence it is possible to more suppress the gap formed between the rectangular electric wire and the covering material 10. When the thickness of the viscoelastic layer 12 is 2 µm or more, it is possible to furthermore suppress the gap formed between the rectangular electric wire and the covering material 10.

The covering material 10 has a tensile modulus of elasticity at 25°C of 5.0 GPa or more and preferably 6.0 GPa or more. When the tensile modulus of elasticity at 25°C is 5.0 GPa or more, in the case where the rectangular electric wire is covered with the covering material 10, it is possible to suppress the occurrence of the necking phenomenon, and it is possible to suppress the degradation of the reliability of the overlap. Moreover, when the covered rectangular electric wire is produced by covering the rectangular electric wire, it is possible to suppress the degradation of the insulation property of the covered rectangular electric wire. Additionally, when the tensile modulus of elasticity at 25°C is 6.0 GPa or more, it is possible to more suppress the occurrence of the necking phenomenon.

The tensile modulus of elasticity of the covering material 10 at 25°C is preferably as large as possible; however, from the viewpoint of the handleability, the upper limit of the tensile modulus of elasticity at 25°C is, for example, 50 GPa.

The "tensile modulus of elasticity at 25°C" is measured by performing a tensile test in an atmosphere of 25°C according to ASTM-D882.

The "tensile modulus of elasticity at 25°C" can be adjusted by appropriately introducing -O- (ether bond) into the molecular structure constituting the backing according to the polymer design of the backing, the film formation conditions of the backing, the stretching conditions of the backing and the like.

The covering material 10 has a thickness of preferably 50 µm or less, more preferably 40 µm or less, further preferably 30 µm or less and furthermore preferably 20 µm or less. When the thickness is 50 µm or less, it is possible to reduce the level difference between the covering material 10 wound around the rectangular electric wire and the rectangular electric wire portion around which the covering material 10 is not yet wound, and hence it is possible to more suppress the degradation of the reliability of the overlap. Additionally, the insulating layer can be made thinner, hence the occupation area ratio of the rectangular electric wire per unit cross-sectional area can be increased, and accordingly the wire occupation rate can be increased and the performances of the coil devices and the like can be improved.
On the other hand, the covering material 10 has a thickness of preferably 7 µm or more and more preferably 10 µm or more. When the thickness is 7 µm or more, the strength is sufficient and the handleability is excellent; when the thickness is 10 µm or more, the strength is more sufficient and the handleability is more excellent.

The covering material 10 preferably has a width of one or more times and two or less times the width of the rectangular electric wire to be covered, from the viewpoint that when the rectangular electric wire is covered with the covering material 10 spirally wound around the rectangular electric wire, it is possible to make narrow the width of the lap portion and it is possible to reduce the angle between the extension direction of the rectangular electric wire and the winding direction of the covering material 10. The width of such a covering material 10 is, for example, preferably 1 mm or more and 80 mm or less, more preferably 1.5 mm or more and 60 mm or less and furthermore preferably 2 mm or more and 40 mm or less.

The covering material 10 is preferably a lengthy product because the covering of the electric wire with the covering material 10 is preferably free from the patching together portion corresponding to the connection portion in the covering of the electric wire. The length of such a covering material 10 is, for example, preferably 500 mm or more, more preferably 1000 mm or more and furthermore preferably 3000 mm or more. The covering material 10 of the present embodiment is wound in a roll shape around the winding core 20 to be retained; however, the covering material 10 of the present embodiment may also be retained as wound around a winding core 20 in a plurality of rows, namely, in so-called bobbin winding.

Next, with reference to FIGS. 1 and 2, the production method of the covering material 10 in the present embodiment is described.

First, as described above, the backing 11 having the upper surface 11a and the lower surface 11b opposite to the upper surface 11a is prepared.

Next, the viscoelastic layer 12 is formed on the upper surface 11a of the backing 11. The formation method of the viscoelastic layer 12 is not particularly limited; for example, the viscoelastic layer 12 can be formed by a method of coating the upper surface 11a of the backing 11 with a silicone-based viscoelastic composition.

Specifically, a solution prepared by dissolving, in a solvent such as toluene, the silicone-based viscoelastic composition including a silicone rubber, a silicone resin, a cross-linking agent, a catalyst and the like is applied to the upper surface 11a of the backing 11, and next, by heating the aforementioned mixture, the solvent is distilled off and cross-linking is performed. Examples of the formation method of the viscoelastic layer 12 including the silicone-based viscoelastic composition in the present embodiment include: an extrusion coating method based on roll coating, kiss-roll coating, gravure coating, reverse coating, roll brush coating, spray coating, dip roll coating, bar coating, knife coating, air-knife coating, curtain coating, lip coating or die coating.

By performing the foregoing steps, the covering material 10 shown in FIG. 2 can be produced. The production method of the covering material 10 is not particularly limited to the above-described method. When the covering material 10 is provided with a release liner, the covering material 10 may be produced, for example, by the following method.

Specifically, first, a release liner is prepared. Examples of the release liner include: paper; films of synthetic resins such as polyethylene, polypropylene and polyethylene terephthalate; and rubber sheet, paper, cloth, non-woven fabric, net, foam sheet and metal foil or laminate sheets of these.

Next, on the release liner, for example, the viscoelastic layer 12 including the silicone-based viscoelastic composition is formed. The formation method of the viscoelastic layer 12 is not particularly limited; however, when the addition reaction type cross-linking is performed by heating, using toluene as the solvent, the heating temperature is, for example, preferably 80°C or higher and 150°C or lower and more preferably 100°C or higher and 130°C or lower. The heating temperature is not particularly limited as long as the heating temperature allows the solvent to be distilled off and allows the intended cross-linking reaction to proceed.

Next, the viscoelastic layer 12 formed on the release liner is transferred onto the backing 11. By performing the foregoing steps, the covering material 10 shown in FIG. 2 can be produced.

In the present embodiment, as shown in FIG. 1, a step of winding, around the winding core 20, the covering material 10 shown in FIG. 2 is further performed. This step may be omitted depending on the factors such as the shape of the covering material 10.

As described above, the covering material 10 in the present embodiment is a covering material for covering a rectangular electric wire in such a way that the covering material is spirally wound around the rectangular electric wire in a manner partially overlapping with itself, wherein the covering material includes a backing having a tensile modulus of elasticity at 25°C of 5.0 GPa or more.

Because the tensile modulus of elasticity of the backing 11 in the covering material 10 falls within the aforementioned range, in the case where the rectangular electric wire is covered with the covering material 10, it is possible to suppress the occurrence of the necking phenomenon, and it is possible to suppress the degradation of the reliability of the overlap. Moreover, when the covered rectangular electric wire is produced by covering the rectangular electric wire, it is possible to suppress the degradation of the insulation property of the covered rectangular electric wire. Additionally, it is also possible to improve the yield ratio when the covered rectangular electric wire is produced, and it is possible to improve the workability in corporation with the suppression of the degradation of the reliability of the overlap.

### Second Embodiment

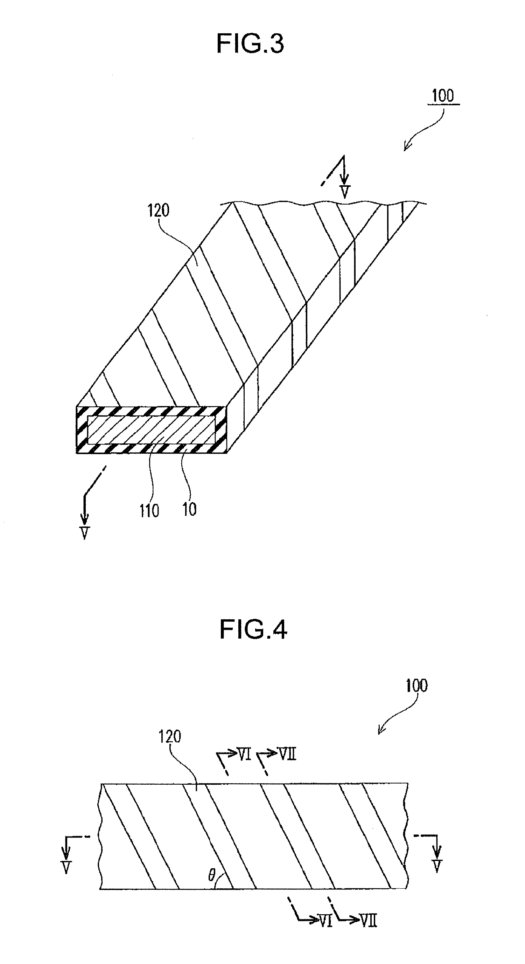

With reference to FIGS. 3 to 7, the covered rectangular electric wire 100 in the second embodiment according to the present invention is described. In the present embodiment, as shown in FIG. 3, the covered rectangular electric wire 100 includes the covering material 10 of the first embodiment and a rectangular electric wire 110 covered with this covering material 10.

The mode of covering of the rectangular electric wire 110 with the covering material 10 is not particularly limited as long as the rectangular electric wire 110 is covered in such a way that the covering material 10 is spirally wound around the rectangular electric wire in a manner partially overlapping with itself. As shown in FIGS. 3 to 7, the rectangular electric wire 110 in the present embodiment is covered in such a way that the covering material 10 is spirally wound around the rectangular electric wire 110 in a manner partially overlapping with itself to form a lap portion 120. In other words, the rectangular electric wire 110 is covered in such a way that the covering material 10 is spirally wound around the rectangular electric wire 110 in a manner partially overlapping with itself in a half lap manner.

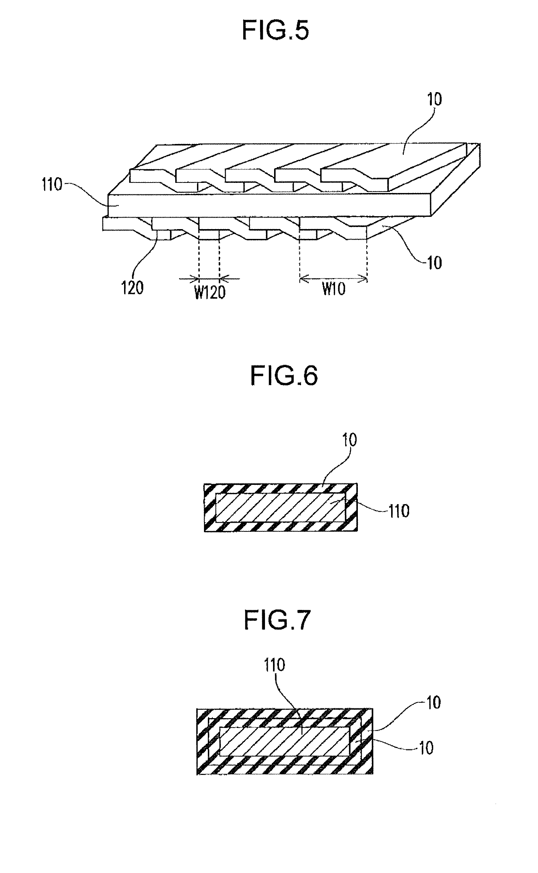

As shown in FIGS. 5 and 6, the rectangular electric wire 110 is singly covered with the covering material 10 in the area in which no lap portion 120 is formed; and as shown in FIGS. 5 and 7, the rectangular electric wire 110 is doubly covered with the covering material 10 in the area in which the lap portion 120 is formed. Accordingly, the provision of the lap portion 120 enables the increase of the insulation property of the rectangular electric wire 110.

As shown in FIG. 5, the width W120 of the lap portion 120 (also referred to as the overlap width or the creeping distance) is preferably less than 40% and more preferably 30% or less of the width W10 of the covering material 10. The larger the width W120 of the lap portion 120 is, the more difficult the pass of the electric current through the covering material 10 is, and hence the discharge can be suppressed and the dielectric breakdown voltage can be improved. However, in the present embodiment, the viscoelastic layer 12 adheres to the lower surface 11b of the backing 11 in the lap portion 120, and hence even when the width W120 of the lap portion 120 is small, the pass of the electric current through the covering material 10 is difficult. When the width W120 of the lap portion 120 can be designed to be small as described above, the length of the rectangular electric wire 110 which can be covered with a piece of the covering material 10 as wound therearound can be designed to be long.

Next, the rectangular electric wire 110 is described.
As the rectangular electric wire 110, here is used a rectangular electric wire. The rectangular electric wire is a tape-shaped wire, and each of the edges thereof may be angular or curved (rounded).

The rectangular electric wire 110 is not particularly limited, and heretofore well known rectangular electric wires can be used; as the materials for such wires, for example, wires made of copper, copper alloy, aluminum, aluminum alloy, or combinations of two or more of these metals can be used. As the rectangular electric wire 110, electric wires made of various superconducting materials such as a bismuth-based, an yttrium-based and a niobium-based superconducting material can also be used.

An example of a specific dimension of the rectangular electric wire 110 is such that the thickness is 1 mm or more and 10 mm or less, the width is 1 mm or more and 20 mm or less, and the aspect ratio (the ratio width/thickness in the cross-sectional shape) is approximately 1 or more and 60 or less.

Next, the production method of the covered rectangular electric wire 100 in the present embodiment is described.

First, according to the first embodiment, the covering material 10 is produced.

Next, the rectangular electric wire 110 is prepared, and as shown in FIGS. 3 to 7, the covering material 10 is spirally wound around the rectangular electric wire 110 in a manner partially overlapping with itself in a half lap manner. Specifically, the covering material 10 is arranged in such a way that an area of the viscoelastic layer 12 is brought into contact with the rectangular electric wire 110, and the rest area of the viscoelastic layer 12 is brought into contact with an area of the lower surface 11b of the backing 11 of the covering material 10.

In this step, the rectangular electric wire 110 is covered with the covering material 10 in such a way that the angle θ between the extension direction of the rectangular electric wire 110 and the winding direction of the covering material 10 is preferably less than 80° and more preferably 75° or less. Additionally, the rectangular electric wire 110 is covered with the covering material 10 in such a way that the width W120 of the lap portion 120 is preferably less than 70% and more preferably 50% or less of the width W10 of the covering material 10.

In the case where the covering material 10 is provided with a release liner, when the covering material 10 is wound around the rectangular electric wire 110, the covering material 10 is wound around the rectangular electric wire 110 while the release liner and the upper surface 12a of the viscoelastic layer 12 are being released from each other.

By performing the foregoing steps, the covered rectangular electric wire 100 of the present embodiment shown in FIGS. 3 to 7 can be produced.

As described above, the covered rectangular electric wire 100 in the present embodiment includes the covering material 10 of the first embodiment and the rectangular electric wire 110 covered with the covering material 10 in such a way that the covering material 10 is wound around the rectangular electric wire 110 in a manner partially overlapping with itself

The covered rectangular electric wire 100 in the present embodiment can suppress the degradation of the insulation property of the covered rectangular electric wire 100.

### Third Embodiment

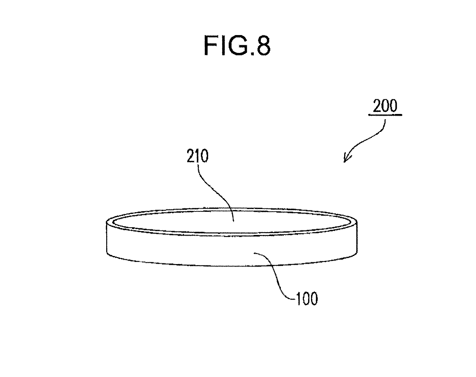

With reference to FIG. 8, description is made on a coil 200 as an example of the electrical device of the third embodiment of the present invention. As shown in FIG. 8, the coil 200 of the present embodiment includes a reel 210 and the covered rectangular electric wire 100 of the second embodiment wound around the reel 210.

The reel 210 is not particularly limited as long as the covered rectangular electric wire 100 can be wound around the reel 210; however, examples of the reel 210 include a cylindrical type and a racetrack type. The covered rectangular electric wire 100 may be a string, or may be formed of a plurality of strings connected to each other according to the required length. The coil may be formed of a plurality of laminated coils 200.

The production method of the coil 200 in the present embodiment includes a step of preparing the reel 210, and a step of winding the covered rectangular electric wire 100 around the reel 210.

In the present embodiment, the coil 200 is described as an example of the electrical device; however, the electrical device is not limited to the coil 200. Examples of the electrical device include: an insulating coil, a superconducting coil, a superconducting magnet, a superconducting cable and an electric power storage apparatus.

As described above, the coil 200 as an example of the electrical device of the present embodiment is produced by using the covered rectangular electric wire 100 of the second embodiment.

According to the coil 200 as an example of the electrical device of the present invention, the coil 200 can suppress the degradation of the properties of the electrical devices due to the degradation of the insulation property of the covered rectangular electric wire.

### Examples

### Example 1

The same covering material as in the first embodiment was produced. Specifically, 70 parts by weight of "X-40-3229 (a silicone rubber, solid content: 60%, manufactured by Shin-Etsu Chemical Co., Ltd.) and 30 parts by weight of "KR-3700" (a silicone resin, solid content: 60%, manufactured by Shin-Etsu Chemical Co., Ltd.) as a silicone-based viscoelastic material, 0.5 part by weight of a platinum catalyst "PL-50T" (manufactured by Shin-Etsu Chemical Co., Ltd.) and 315 parts by weight of toluene as a solvent were mixed together, and the resulting mixture was stirred with a disper to prepare a mixed solution containing a silicone-based viscoelastic composition. As the backing, a polyimide resin film "Upilex(registered trademark)-12.5S" (thickness: 12.5 µm, manufactured by Ube Industries, Ltd.) was used. The mixed solution was applied with a fountain roll onto the backing in such a way that the thickness of the silicone-based viscoelastic composition after drying was 3 µm, and cured and dried under the conditions of a drying temperature of 150°C and a drying time of 1 minute, to prepare a covering material in which a viscoelastic layer having a gel fraction of 74% was formed on the backing. The obtained covering material was taken up onto a winding core 20 (inner diameter: 76 mm) to yield a roll-shaped wound body as shown in FIG. 1.

### Example 2

The covering material was prepared in the same manner as in Example 1 except that "Kapton(registered trademark) 12.5EN" (thickness: 12.6 µm, manufactured by Du Pont-Toray Co., Ltd.) was used as the backing.

### Example 3

The covering material was prepared in the same manner as in Example 1 except that "Kapton(registered trademark) 25EN" (thickness: 25 µm, manufactured by Du Pont-Toray Co., Ltd.) was used as the backing.

### Example 4

The covering material was prepared in the same manner as in Example 1 except that "Upilex(registered trademark)-75S" (thickness: 75 µm, manufactured by Ube Industries, Ltd.) was used as the backing.

### Example 5

A covering material made only of the backing was produced in the same manner as in Example 1 except that no viscoelastic layer was formed on Upilex(registered trademark)-12.5S as the backing.

### Comparative Example 1

The covering material was prepared in the same manner as in Example 1 except that "Kapton(registered trademark) 12.5H" (thickness: 25 µm, manufactured by Du Pont-Toray Co., Ltd.) was used as the backing.

### (Evaluation Methods)

For each of Examples 1 to 5 and Comparative Example 1, the tensile modulus of elasticity was measured as follows, and the overlap precision and the adhesiveness were also evaluated as follows. The results thus obtained are shown in Table 1.

### (Tensile Modulus of Elasticity)

The tensile modulus of elasticity of the backing used in each of Examples 1 to 5 and Comparative Example 1 was measured in an atmosphere of 25°C according to ASTM-D882.

### (Overlap Precision)

From each of the covering materials for rectangular electric wire produced in Examples 1 to 5 and Comparative Example 1, a specimen of 5 mm in width was prepared. As a rectangular electric wire, "Di-BSCCO" (wire: bismuth-based superconducting wire, 0.23 mm in thickness × 4.3 mm in width, Sumitomo Electric Industries, Ltd.) was used. Each of the specimens was spirally wound around the rectangular electric wire at a winding rate of 30 m/min in such a way that the winding angle (the angle θ in FIG. 4) was 60° and the overlap (the width W120 of the lap portion 120 in FIG. 5) of the covering material with itself was the designed value of 2.0 mm; thus, the evaluation samples of 10 m in length in the extension direction were prepared.
Then, the reliability of the overlap of each of the evaluation samples was evaluated. As the evaluation of such reliability of the overlap, the overlap precision was evaluated. Such an overlap precision was derived by measuring with a vernier caliper the lap portion widths at 20 positions in each of the evaluation samples, and by representing in percentage the ratios of the respective measurement values to the designed value of 2.0 mm. Thus, the case where the overlap precision was less than ±10% was marked with "○" and the case where the overlap precision was equal to or larger than ±10% was marked with "×." The results thus obtained are shown in Table 1. In Table 1, together with the evaluation results of the overlap precision, the upper limit and the lower limit of each of the measurement values are also shown.

### (Adhesiveness)

The overlap precision evaluation samples prepared for Examples 1 to 4 and Comparative Example 1 were used as the evaluation samples and the adhesiveness of each of the evaluation samples was evaluated. As the index representing such adhesiveness, the air bubble penetration rate was used, and the air bubble penetration rate of each of the evaluation samples was derived as follows. Specifically, the area of the lap portion of the covering material wound around the rectangular electric wire on one surface of each of the evaluation samples and the area occupied by air bubbles in the lap portion were measured, and the area occupied by the air bubbles was divided by the area of the lap portion and the resulting value was represented in percentage to derive the air bubble penetration rate. The case where the air bubble penetration rate was less than 5% was marked with "⊚," the case where the air bubble penetration rate was 5% or more and less than 10% was marked with "○," and the case where the bubble penetration rate was 10% or more was marked with "Δ." The results thus obtained are shown in Table 1.

### (Evaluation Results)

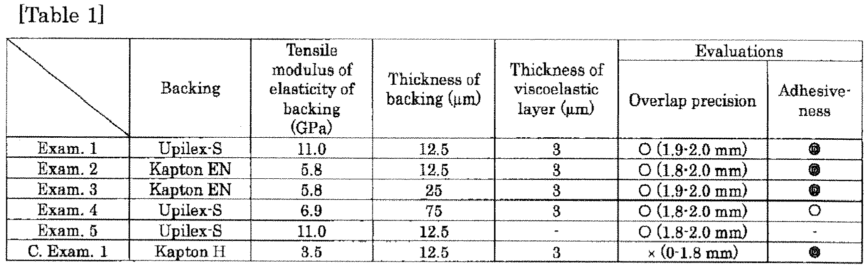

As shown in Table 1, Examples 1 to 5 in each of which the tensile modulus of elasticity of the backing is 5.0 GPa or more were excellent in the overlap precision as compared to Comparative Example 1 falling out of this numerical range, and thus Examples 1 to 5 were found to suppress the degradation of the reliability of the overlap. From a comparison of Examples 1 to 4 with each other, Examples 1 to 3 each having a backing thickness of 50 µm or less were found to be improved in the adhesiveness as compared to Example 4 having a backing thickness exceeding 50 µm.

As described above, Embodiments and Examples of the present invention have been described. Appropriate combinations of the features of the individual Embodiments and individual Examples are also anticipated from the very beginning. Embodiments and Examples disclosed this time are presented for the purpose of exemplification in every aspect, and should be construed as non-limiting. The scope of the present invention is defined by the appended claims rather than foregoing Embodiments and Examples, and all the modifications in the meanings and the scope equivalent to the claims are intended to be included.

## Claims

1. A covering material (10),
**characterized in that** the covering material is a covering material for covering a rectangular electric wire in such a way that the covering material is spirally wound around the rectangular electric wire in a manner partially overlapping with itself; and
the covering material comprises a backing (11) having a tensile modulus of elasticity at 25°C of 5.0 GPa or more.

2. The covering material (10) according to claim 1, wherein a thickness of the covering material is 50 µm or less.

3. The covering material (10) according to claim 1 or 2, further comprising a viscoelastic layer (12) formed on a surface of the backing (11), wherein the backing (11) contains a polyimide resin.

4. The covering material according to claim 3, wherein the viscoelastic layer (12) contains a silicone-based viscoelastic composition.

5. The covering material (10) according to any one of claims 1 to 4, wherein the rectangular electric wire is a superconducting wire.

6. A covered rectangular electric wire (100), **characterized in that** the covered rectangular electric wire (10) comprises:
the covering material according (10) to any one of claims 1 to 5; and
a rectangular electric wire (110) covered with the covering material (10) in such a way that the covering material (10) is spirally wound around the rectangular electric wire (110) in a manner partially overlapping with itself.

7. An electrical device (200), **characterized in that** the electrical device (200) is produced by using the covered rectangular electric wire (100) according to claim 6.
